Europäisches Patentamt

European Patent Office

Office européen des brevets

(11) Veröffentlichungsnummer : **0 416 336 B1**

(12) **EUROPÄISCHE PATENTSCHRIFT**

(45) Veröffentlichungstag der Patentschrift :
01.03.95 Patentblatt 95/09

(51) Int. Cl.$^6$ : **G01K 7/22**

(21) Anmeldenummer : **90115627.3**

(22) Anmeldetag : **16.08.90**

(54) **Temperaturwächter.**

(30) Priorität : **08.09.89 DE 3929993**

(43) Veröffentlichungstag der Anmeldung :
**13.03.91 Patentblatt 91/11**

(45) Bekanntmachung des Hinweises auf die
Patenterteilung :
**01.03.95 Patentblatt 95/09**

(84) Benannte Vertragsstaaten :
**AT BE CH DE DK ES FR GB GR IT LI NL SE**

(56) Entgegenhaltungen :
**CH-A- 398 122**
**DE-A- 2 302 345**
**GB-A- 1 325 451**
**SCIENCE AND INDUSTRY, Band 12, Nr. 3,
1965, Seiten 12-14; "Thermocouples,cables
and tubes for in-core instruments at Halden
BWR"**

(73) Patentinhaber : **SENSYCON GESELLSCHAFT
FÜR INDUSTRIELLE SENSORSYSTEME UND
PROZESSLEITTECHNIK MBH
Hackethalstrasse 7
D-30179 Hannover (DE)**

(72) Erfinder : **Eiermann, Kurt, Dr.
Friedhofstrasse 26
D-6102 Pfungstadt (DE)**
Erfinder : **Ehinger, Karl
Hanauer Landstrasse 12
D-8757 Karlstein (DE)**

(74) Vertreter : **Meissner, Peter E., Dipl.-Ing.
Meissner & Meissner,
Patentanwaltsbüro,
Hohenzollerndamm 89
D-14199 Berlin (DE)**

**Beschreibung**

Die Erfindung bezieht sich auf einen Temperaturwächter gemäß Oberbegriff.

Temperaturwächter sind z. B. aus der DE-B 17 73 577 oder EP-B 0 078 675 bekannt. So kann der Temperaturwächter aus einem langen Draht aus Nickel bestehen, der koaxial von einem aus Nickel bestehenden Rohr umgeben ist. Dieses ist zur Verbindung zwischen den leitenden Materialien mit einer halbleitenden Substanz aus Nickeloxid gefüllt. Zur Temperaturüberwachung dient der elektrische Widerstand zwischen den Nickelleitern, welcher im wesentlichen durch den elektrischen Widerstand der zwischen den Leitern befindlichen halbleitenden Substanz bestimmt wird. Bereits bei einer örtlich eng begrenzten und verhältnismäßig geringen Temperaturerhöhung ("Hot-spot") nimmt der elektrische Widerstand zwischen den Leitern entsprechend des hohen negativen Temperaturkoeffizienten des elektrischen Widerstands des Nickeloxids stark ab und kann von einem an den Enden der Leiter angeschlossenen Meßgerät erfaßt werden. Damit dieser elektrische Widerstand gemessen werden kann, ist der Innenleiter durch eine gasdichte, elektrisch isolierende Durchführung nach außen geführt. Diese ist über ein Aufnahmerohr mit dem Schutzrohr des Sensors verbunden. Da das Nickeloxid stark hygroskopisch ist, muß darauf geachtet werden, daß Feuchtigkeit nicht eindringt. Andernfalls würden tatsächlich nicht existierende "Hot-spots" vorgetäuscht werden, nämlich dort, wo die eingedrungene Feuchtigkeit einen Kurzschluß zwischen den elektrischen Leitern hervorruft. In diesem Fall wird der Temperaturwächter funktionsuntüchtig. Folglich können auch keine weiteren Anzeigen über Temperaturänderungen erfaßt werden.

Es ist nun bekannt, gegen eindringende Feuchtigkeit das äußere Nickelrohr mit einer Schutzhülle dicht zu ummanteln, die aus Edelstahl oder Inconel bestehen kann. Diese Umhüllung kann durch Umformung mit dem Nickelrohr kaltverschweißt sein. Da entsprechende Temperaturwächter häufig schlangenförmig auf die zu überwachende Fläche wie z. B. einen Hochdruckhochtemperaturreaktor verlegt werden, besteht jedoch weiterhin die Gefahr, daß die Umhüllung durch Nadelrisse undicht wird.

Es sind auch Temperaturwächter bekannt, bei denen zwei Drähte aus verschiedenen Werkstoffen zur Bildung eines Thermopaares in ein Schutzrohr ohne gegenseitige Berührung eingelagert werden, wobei das Rohr selbst von einem halbleitenden Material ausgefüllt wird. Die beiden Drähte wirken als Thermopaar, sobald der elektrische Widerstand des Halbleitersubstrats an einer Stelle durch Temperaturerhöhrungen zusammenbricht und damit die beiden Drähte an dieser Stelle zu einer Meßstelle kruzgeschlossen werden. Entsprechende Thermoelementanordnungen zeigen jedoch den Nachteil, daß bei einem Kurschluß durch Feuchtigkeit nicht festgestellt werden kann, ob ein unzulässiger Temperaturanstieg aufgetreten ist, oder ob das Signal aufgrund eingedrungener Flüssigkeit hervorgerufen wurde.

Ferner sind Thermoelemente (CH-A 398 122) und Widerstandsthermometer (DE-A 23 02 345) bekannt. Bei ersteren kann ein Luftzwischenraum zum Schutz der Leiter vorgesehen sein, wohingegen bei letzteren zur Vermeidung einer Trägheit Luftspalte zwischen einem äußeren Schutzrohr und dem Meßwiderstand vermieden werden sollen.

Aufgabe der vorliegenden Erfindung ist es, einen Temperaturwächter der eingangs genannten Art so weiterzubilden, daß ein hinreichender Schutz gegen Eindringen von Feuchtigkeit und damit eine hohe Funktionstüchtigkeit gewährleistet ist, ohne daß eine unerwünschte Trägheit hinsichtlich der Erfassung von unzulässigen Temperaturerhöhungen auftritt.

Die Aufgabe wird erfindungsgemäß im wesentlichen dadurch gelöst, daß der Temperaturwächter ein den Sensor bzw. die den Sensor gegebenenfalls ohne Abstand dicht umgebende Hülle mit Abstand umgebendes, gasdichtes Schutzrohr aufweist, das mit einem trockenen Gas gefüllt ist. Bei diesem Gas kann es sich um ein Edelgas, vorzugsweise um Helium handeln.

Durch den erfindungsgemäßen Vorschlag ist sichergestellt, daß der eigentliche Sensor bzw. die nach dem Stand der Technik bekannte, den Sensor dicht umgebende Hülle nicht mit der Umgebung unmittelbar in Berührung gelangt. Vielmehr ist ein Schutzrohr vorgesehen, das eine hinreichende Abschirmung bietet, ohne daß hierdurch die Leitung der Temperatur zum Sensor hin negativ beeinflußt wird. Insbesondere bei der Verwendung von Helium als trockenes Gas ergibt sich der Vorteil, daß eine gute Wärmeleitung zwischen dem Schutzrohr und dem Sensor gewährleistet ist. Folglich führt die Konstruktion des erfindungsgemäßen Temperaturwächters nicht zu einer die Überwachungsfunktion negativ beeinflussenden Trägheit.

Bei der Verwendung von Helium ist des weiteren der Vorteil gegeben, daß bei etwaigen Undichtigkeiten mit Hilfe eines Helium-Schnüffelgerätes Leckstellen problemlos geortet und sodann behoben werden können.

Die Gefahr von Rissen und ähnliches wird des weiteren dadurch verringert, daß das Schutzrohr aus Edelstahl oder Inconel besteht, wobei es durch nahtloses Glühen hergestellt ist. Da zudem die Wanddicken im Bereich zwischen 0,5 mm und 1 mm liegen, ist zusätzlich gewährleistet, daß auch bei mäander-, schlangen- oder bogenförmiger Auslegung des Temperaturwächters die Gefahr der Beschädigung des Schutzrohres, die zu einer Undichtigkeit führen könnte, ausgeschlossen ist.

2

Um ein problemloses Einbringen des Sensors in das Schutzrohr zu ermöglichen, ist nach einem Ausgestaltung der Erfindung vorgesehen, daß der Sensor an einem Ende ein als Handhabe zum Einziehen in das Schutzrohr ausgebildetes Endstück aufweist.

Das Schutzrohr selbst kann an einem Ende mit einem kurzen Schutzrohr größeren Durchmessers -nachstehend "Anschluß- oder Steckerschutzrohr" genannt- verbunden sein, das mit dem Durchführungsteil des Sensors verbunden, beispielsweise gasdicht verschweißt wird und an seinem anderen Ende mit einem Stopfen versehen sein. Letzteres ermöglicht ein einfaches Füllen des Schutzrohres mit dem Trockengas, insbesondere dem Helium und anschließendes dichtes Verschließen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:

Fig. 1     eine Schnittdarstellung eines Temperaturwächters nach dem Stand der Technik,

Fig. 2     einen Längsschnitt durch einen erfindungsgemäßen Temperaturwächter und

Fig. 3     eine Schnittdarstellung entlang der Linie III-III in Fig. 2.

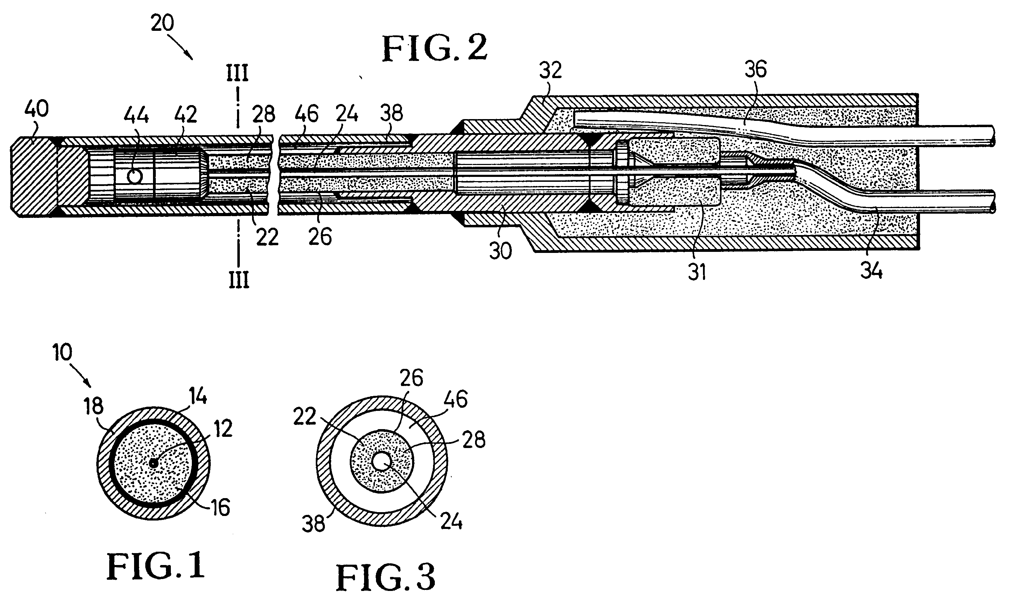

In Fig. 1 ist ein nach dem Stand der Technik bekannter Sensor (10) eines Temperaturwächters im Schnitt dargestellt. Dabei kann es sich um einen Temperaturwächter handeln, wie er z.B. der DE-B-17 73 577 zu entnehmen ist. Der Sensor (10) besteht aus einem aus Nickel bestehenden Innenleiter (12) in Form eines Drahtes, der koaxial von einem aus Nickel bestehenden Außenleiter (14) in Form eines Rohres umgeben ist. Das Rohr, also der Bereich zwischen den Leitern (12) und (14) ist mit einer halbleitenden Substanz (16) in Form von Nickeloxid ausgefüllt. Der elektrische Widerstand des Nickeloxids (16) weist einen hohen negativen Temperaturkoeffizienten auf, so daß bei auftretender Temperaturerhöhung der Widerstand abnimmt. Dies wird mittels einer an die Leiter (12) und (14) angeschlossenen Schaltung festgestellt und gemeldet.

Da das Nickeloxid stark hygroskopisch ist, ist der Außenleiter (14) von einer Schutzhülle (18) umgeben, die z.B. aus Edelstahl oder Inconel oder anderen geeigneten Materialien bestehen kann. Die Schutzhülle (18) ist quasi auf den eigentlichen aus den Leitern (12) und (14) und dem halbleitenden Material (16) bestehenden Sensor (10) "aufgeschrumpft".

Den Fig. 2 und 3 ist ein erfindungsgemäßer Temperaturwächter (20) zu entnehmen, der hinsichtlich seines Sensors (22) den Aufbau aufweisen kann, wie er an Hand der Fig. 1 beschrieben ist. Ein aus Nickel bestehender Innenleiter (24) ist von einem rohrförmigen Nickel-Außenleiter (26) umgeben. Der Zwischenraum zwischen den Leitern (24) und (26) ist von einem halbleitenden Material in Form von Nickeloxid (28) ausgefüllt. Der Außenleiter (26) kann des weiteren von einer nicht dargestellten Schutzhülle umgeben sein. Diese wäre dann dicht auf den Außenleiter (26) aufgebracht.

Der Sensor (22) wird von einer rohrförmigen Halterung (30) mit gasdichter Stromdurchführung (31) aufgenommen, die ihrerseits von einem Steckerschutzrohr (32) umgeben ist. Im Steckerschutzrohr (32) erfolgt eine elektrische Kontaktierung zwischen den Leitern (24) und (26) zu z.B. Kupferlitzen (34) und (36), die zu nicht dargestellten Meß- bzw. Auswerteeinrichtungen führen, beispielsweise durch Stecken, Schweißen oder ähnliches. Um sicherzustellen, daß Feuchtigkeit in das Innere der Steckerschutzrohrseite nicht eindringen kann, ist das Steckerschutzrohr (32) vergossen.

Erfindungsgemäß wird der Sensor (22) von einem Schutzrohr (38) beabstandet umgeben, das zum einen dichtend mit dem Halterohr (30) verbunden ist und zum anderen mit einem Endstopfen (40) verschließbar ist. Der Zwischenraum (46) zwischen dem Sensor (22), also dem Außenleiter (26) bzw. einer diesen umgebenden Schutzhülle und der Innenwandung des Schutzrohres (38) ist mit einem trockenen Gas, vorzugsweise mit Helium gefüllt. Hierdurch ist eine gute Wärmeleitung zwischen dem Schutzrohr (38) und dem Sensor (22) gewährleistet. Gleichzeitig erfolgt ein hinreichender Schutz gegen Feuchtigkeit.

Das Schutzrohr (38) besteht vorzugsweise aus Edelstahl oder Inconel und weist eine Wandstärke zwischen 0,5 mm und 1 mm auf. Das Rohr selbst ist nahtlos geglüht. Folglich sind keine Schweißnähte vorhanden, die zu Undichtigkeiten führen können.

Die Dimensionierung des Innendurchmessers $I_d$ des Schutzrohres (38) zu dem Außendurchmesser $A_d$ des Sensors (22) beträgt vorzugsweise

$$I_d : A_d \approx 2 : 1 \text{ bis } 3 : 2$$

gewählt.

Um den gegebenenfalls mehrere Meter langen Sensor (22) problemlos in das Schutzrohr einzubringen, weist ersterer ein Endstück (42) auf, welches eine Befestigungsmöglichkeit für ein Zugelement wie Zugdraht aufweist. Im Ausführungsbeispiel handelt es sich um ein Zylinderendstück mit Bohrung (44). Hierdurch ist die Möglichkeit gegeben, den Sensor (22) in das Schutzrohr (38) hineinzuziehen. Nachdem dies geschehen ist, erfolgt die Verbindung des Steckerschutzrohrs (32) mit dem Aufnahmerohr (30). Der Zwischenraum (46) zwischen dem Sensor (22) und dem Schutzrohr (38) wird dann mit dem trockenen Gas wie Helium gefüllt. Anschließend wird das Schutzrohr mit dem Endstopfen (40) versiegelt.

Anstelle des beschriebenen Sensors (22) kann auch ein Thermopaar benutzt werden, wie es gleichfalls in der DE-A-17 73 577 angesprochen worden ist. Auch in diesem Fall ist gewährleistet, daß aufgrund des Schutzrohrs (38) und des mit trockenem Gas gefüllten Zwischenraums (46) zwischen Schutzrohr (38) und Sensor (22) Feuchtigkeit normalerweise nicht eindringen kann, so daß eine hohe Funktionstüchtigkeit und Lebensdauer des Temperaturwächters gewährleistet ist.

**Patentansprüche**

1.  Temperaturwächter (20) für größere Flächen umfassend zumindest zwei Langgestreckte, entlang ihrer gesamten Längserstreckung zueinander beabstandete, entlang ihrer gesamten oder im wesentlichen entlang ihrer gesamten Längserstreckung über eine halbleitende Substanz (28) verbundene elektrische Leiter (24, 26) als Sensor (22), wobei der Sensor gegebenenfalls von einer rohrförmigen metallischen Hülle ohne Abstand dicht umgeben ist,
    **dadurch gekennzeichnet**, daß der Temperaturwächter (20) ein den Sensor (22) bzw. gegebenenfalls die den Sensor ohne Abstand dicht umgebende Hülle mit Abstand umgebendes, gasdichtes Schutzrohr (38) aufweist, das mit einem trockenen Gas gefüllt ist.

2.  Temperaturwächter nach Anspruch 1,
    **dadurch gekennzeichnet**,
    daß das Gas ein Edelgas ist.

3.  Temperaturwächter nach Anspruch 2,
    **dadurch gekennzeichnet**,
    daß das Gas Helium ist.

4.  Temperaturwächter nach Anspruch 1,
    **dadurch gekennzeichnet**,
    daß das Schutzrohr (38) aus Edelstahl oder Inconel besteht.

5.  Temperaturwächter nach Anspruch 1,
    **dadurch gekennzeichnet**,
    daß das Schutzrohr (38) nahtlos geglüht ist.

6.  Temperaturwächter nach Anspruch 1,
    **dadurch gekennzeichnet**,
    daß die Wanddicke des Schutzrohres (38) 0,5 mm bis 1 mm und der Außendurchmesser des Schutzrohres vorzugsweise 6 mm beträgt.

7.  Temperaturwächter nach zumindest Anspruch 1,
    **dadurch gekennzeichnet**,
    daß der Sensor (22) ein als Handhabe zum Einziehen in das Schutzrohr (38) ausgebildetes Endstück (42) aufweist.

8.  Temperaturwächter nach zumindest Anspruch 1,
    **dadurch gekennzeichnet**,
    daß das Schutzrohr (38) an einem Ende dicht mit einem Steckerschutzrohr (32) verbunden und an seinem anderen Ende mit einem Stopfen (40) verschlossen ist.

**Claims**

1.  Temperature probe (20) for larger surfaces comprising at least two elongated electrical conductors (24, 26), spaced from each other anlong their whole length and connected through a semiconducting substance (28) along their whole or nearly whole length, and acting as a sensor means (22), and if necessary said sensor is closely shielded without a distance by a tube-like metallic sheath,
    **characterized in that**
    said temperature probe (20) comprises a gastight protecting tube (38) surrounding at a distance said sensor (22) or if applicable said sheath surrounding without a distance said sensor, said protecting tube is filled with a dry gas.

2. Temperature probe as defined in claim 1,
**characterized in that**
the gas is a noble gas.

3. Temperature probe as defined in claim 2,
**characterized in that**
the gas is helium.

4. Temperature probe as defined in claim 1,
**characterized in that**
said protecting tube (38) consists of high-grade steel or Inconel.

5. Temperature probe as defined in claim 1,
**characterized in that**
said protecting tube (38) is seamlessly annealed.

6. Temperature probe as defined in claim 1,
**characterized in that**
the wall thickness of said protecting tube (38) is 0,5 mm through 1 mm, and the outer diameter of the protecting tube is preferably 6 mm.

7. Temperature probe as defined in claim 1,
**characterized in that**
said sensor (22) is fitted with a tail piece (42) for permitting easy handling during introduction into the protecting tube.

8. Temperture probe as defined in claim 1,
**characterized in that**
said protecting tube (38) is at one end closely connected with a plug tube (32) and at the other is sealed with a plug (40).


**Revendications**

1. Contrôleur de températures (20) pour grandes surfaces, comprenant au moins deux conducteurs électriques (24, 26) allongés connectés et maintenus à distance l'un de l'autre sur toute leur extension longitudinale par une substance semi-conductrice (28) sur la totalité, ou du moins essentiellement sur la totalité de toute leur extension longitudinale et jouant le rôle d'un capteur (22), dans lequel le capteur est éventuellement entouré de manière étanche et sans écartement par une gaine métallique tubulaire, caractérisé en ce que le contrôleur de température (20) ou, éventuellement, la gaine entourant sans écartement le capteur, présente un tube de protection (38) étanche aux gaz et entourant le capteur (22) à une certaine distance, ce tube étant rempli d'un gaz sec.

2. Contrôleur de température selon la revendication 1, caractérisé en ce que le gaz est un gaz noble.

3. Contrôleur de température selon la revendication 2, caractérisé en ce que le gaz est de l'hélium.

4. Contrôleur de température selon la revendication 1, caractérisé en ce que le tube de protection (38) est constitué d'acier inoxydable ou d'Inconel.

5. Contrôleur de température selon la revendication 1, caractérisé en ce que le tube de protection (38) est recuit sans soudure.

6. Contrôleur de température selon la revendication 1, caractérisé en ce que l'épaisseur de paroi du tube de protection (38) est comprise entre 0,5 et 1 mm et que le diamètre extérieur du tube de protection est égal, de préférence, à 6 mm.

7. Contrôleur de température selon au moins la revendication 1, caractérisé en ce que le capteur (22) présente une pièce terminale (42) formée dans le tube de protection (38) pour servir de poignée.

8. Contrôleur de température selon au moins la revendication 1, caractérisé en ce que le tube de protection (38) est connecté de manière étanche à une extrémité avec un tube de protection à fiche (32) et est fermé à son autre extrémité par un bouchon (40).

FIG.2

FIG.3

FIG.1